# EUROPEAN PATENT SPECIFICATION

(11) **EP 1 372 947 B1**
(45) Date of publication and mention of the grant of the patent: **23.02.2011**
(21) Application number: 02707350.1
(22) Date of filing: 25.02.2002
(51) Int. Cl.: B32B 1/00

(54) **PROCESS OF GLUING**
KLEBEVERFAHREN
PROCEDE DE COLLAGE

(30) Priority: 26.02.2001 NO 20010952
(43) Date of publication of application: 02.01.2004
(73) Proprietor: Dynea OY, 00530 Helsinki (FI)
(72) Inventor: PEDERSEN, Astrid, N-2020 Skedsmokorset (NO); SANDBAKKEN, Per, Olav, N-0752 Oslo (NO)
(74) Representative: Balle, Morten
(86) International application number: PCT/NO2002/000079
(87) International publication number: WO 2002/068178

(56) References cited:
- EP-A- 0 501 174
- EP-A- 1 136 537
- WO-A-89/05221
- DE-A- 19 603 988
- SE-B- 370 546
- SE-B- 373 525
- SE-C- 84 799

## Description

### Technical field

The present invention relates to gluing with urea-formaldehyde (UF)- and /or melamine-urea-formaldehyde (MUF) adhesive. More specifically the present invention relates to a method for separate application of UF or MUF adhesive and hardener on the substrate. Specifically the invention relates to the use of specific hardeners and a method for gluing laminated products such as parquet, edge bonding of surface layer for parquet, gluing of laminated wood, and the like in addition to gluing of foil on boards.

### Background

The production of three layered parquet (sandwich parquet), usually comprising a surface layer of hardwood, a core layer of coniferous wood, e.g. spruce, and a balancing veneer layer, is an important field for industrial use of amino adhesives. In three layered parquet the fibre direction is arranged so that the fibres in the surface layer and balancing layer is running in substantially the same direction, whereas the fiber direction in the core layer is running substantially crosswise the direction of the two other layers.

The most commonly used gluing systems in the production of glued wooden products, are two component curable amino adhesives. Two main processes of gluing techniques are used for production of three-layered parquet and in many other lamination processes by means of amino adhesives:
a) a mix-in system, i.e. a system where the adhesive part and the hardener part is mixed before the mixture is applied on the substrate to be glued, and
b) a system for separate application, i.e. a system where the adhesive part and the hardener part are applied separately at the same or at different surfaces.

EP-A-0501174 relates to a mix-in system, where the hardener part is an 30 aqueous solution of an ammonium salt further comprising a vinylresin.

A well known problem in working with the mix-in system is that the pot life of the mixture, i.e. the useable time from the adhesive and the hardener are mixed until the mixture has to be applied, is shorter than required. There is always a contradiction between the required longest possible pot life and the request for glue to cure as fast as possible after the glue is applied to the substrate, so that the pressing is as short as possible. The problem with short pot life is most pronounced in using very rapid adhesive systems, for example to obtain very short press times for thereby to increase the speed of production. Cooling is often used to lengthen the pot life but for some fast curing glue systems the pot life still is too short for industrial use.

In using a glue mixture of adhesive and hardener the equipment for mixing and application has to be cleaned relatively often, resulting in unwanted stops in the production.

For extra fast adhesive systems the pot life are so short that it is impossible to mix the hardener and adhesive before application of the mixture. A method for separate application of hardener and adhesive has to be used for such fast systems. The above mentioned problems are mainly overcome by separate application.

A method for separate application of the hardener and the adhesive components is described in NO 152 449 to AB Casco. The hardener is applied first in the form of a low viscosity aqueous solution of hardener salt having a low content of solids at the substrate by means of a roller having a porous, absorbing surface. The adhesive is then applied at the substrate on top of the hardener solution by means of another application roller before the parts to be glued are laid against each other and are pressed together for the specified curing time.

The hardener according to NO 152 449 has a solids content of 15 to 25 % by weight, wherein the solids are acid or acid generating salts. By application on a substrate like wood the hardener is absorbed into the surface of the substrate. The absorption is desirable, as it prevents or reduces the problem caused by hardener that is taken up by the following application roller for the adhesive causing the adhesive to cure at the roller so that the production has to be stopped to clean the roller.

The fact that the hardener is absorbed by the substrate, however, prevents or reduces the adhesive to penetrate into the substrate, resulting in an inferior adhesion to the substrate and hence a weaker glue line is obtained. Additionally the use of this kind of hardener results in glue line having inferior gap filling properties and less flexibility than the use of mix-in glue systems. Separate application as described above, makes it possible to increase the speed of production and thus reduce the production costs compared with use of mix-in systems. However, separate application systems normally results in a glue line having inferior properties compared with mix-in glue systems.

An alternative method and means for separate application of adhesive and hardener is application of adhesive and hardener by means of nozzles, where one of the parts to be glued is passed under nozzles where the adhesive and hardener are applied at the surface of the substrate at the top of each other or side by side, se e.g. PCT/SE99/01083.

The best utilization of the catalytic properties of the hardener is obtained if the adhesive and hardener are kept separated until the materials to be glued, are joined. This may be achieved as describe above, by applying the hardener and adhesive in stripes besides each other or by applying the adhesive at one surface and the hardener at the other surface. In many instances it is impossible to apply the components so that they are kept separated until the materials are joined.

As an example is it often not possible in practice by veneering and other lamination of thin layers to transport these thin layers through an application device for application of adhesive and hardener. In some instances the application of hardener or adhesive on thin materials may result in visible bleed-through at the other side of the material. Additionally it is not suitable neither from an economical nor from a practical point of view to handle both the joining surfaces.

WO 89/05221 A relates to a method for gluing veneer using a curable adhesive. The curable adhesive is applied to one surface, and a hardener comprising a tackifyer is applied to a zone along the edges of the other surface to ascertain bonding along the edges.

Thus, the use of mix-in systems and glue systems for separate application of adhesive and hardener have different advantages and disadvantages and the selection between the two systems is a compromise between technical, economical and quality related considerations.

NO 55 494 describes a hardener for manual separate application comprising a thickening agent, such as starch, to prevent the hardener from being adsorbed into the substrate. This hardener does not have sufficient adhesion to the substrate to avoid that the hardener will be pulled up by and fasten in the roller for application of adhesive in an automatic applicator.

SE 370546 B relates to a method for separate application by spraying. A thickener for reducing the run-off of the hardener after the application is mendioned.

EP-A-1 136 537, published after the priority date of the present application, describes use of acid and polymer dispersions in hardener for separate application. Use of acid salts or acid generating salts is not described.

DE 196 03 988 A relates to a two component adhesive system, the hardener part thereof comprising a thickener. No cross-binding polymers are mentioned as potential thickeners.

It is thus a goal for the present invention to obtain a process of gluing where the most important advantages for both glue systems are obtained, i.e. that a short press time is obtained at the same time as a cured, flexible and waterproof glue line having good adhesion to the substrates, and where the mentioned shortcomings for the respective systems are eliminated or at least substantially reduced.

### Summary of the invention

It is now surprisingly been found that addition of a polymer dispersion, to the hardener so that the hardener after application forms a film on the surface of the substrate, gives a substantial and unexpected reduction in curing time and an improvement in the characteristics of the glue line compared with the corresponding hardener without said dispersion. The preferred polymer dispersion is an emulsion adhesive.

According to a first aspect the present invention relates to a process for gluing products with a curing amino adhesive, such as melamine urea formaldehyde (MUF) adhesive or urea formaldehyde (UF) adhesive, and a hardener comprising acid, acid salt and/or acid generating salt and a polymer dispersion or a mixture of different polymer dispersions comprising at least one crossbinding polymer, and conventional additives, characterized in that the adhesive and the hardener are applied separately to the same surface of the parts to be glued, that the parts thereafter are joined and that the glue thereafter is cured under pressure.

According to a second aspect the present invention relates to a use of a hardener comprising acidic salt and/or acid generating salt, a polymer dispersion or a mixture of polymer dispersions comprising at least one cross-binding polymer, and conventional additives in a method for gluing wooden materials by separate application of adhesive and hardener to the same surface of the substrate to be glued, and where the adhesive is a curing amino adhesive such as melamine-urea-formaldehyde (MUF) or urea-formaldehyde (UF) adhesive.

The present invention is not limited to any special device for application of respectively the hardener or the adhesive. Thus the method is applicable to application with rollers, nozzles or application with a brush or the like.

It is known to use a dispersion of polyvinylacetate (PVAc) in hardeners for curing amino adhesives, see PCT/DK99/00159. The dispersion is said to favourable influence on the quality of the glue line. However, only mix-in systems are described in said application. The demands with regard to physical properties in a mix-in glue system and a glue system for separate application are very different.

Firstly, it is generally accepted in the field that a hardener for separate application, at least when the hardener and adhesive are to be applied by rollers, must have a relatively low content of solids and low surface tension so that it will be absorbed by the substrate to avoid that the hardener is pulled up by the roller for application of adhesive and create the above mentioned problems.

Secondly, there are contradictory considerations to be taken in developing a mix-in glue system and a glue system for separate application. As mentioned above, a mix-in system has to be a "slow" system or a system having a long pot life, whereas a system for separate application preferably is a "fast" system, curing rapidly after application of the adhesive and hardener.

Consequently it is surprising that a hardener containing in the range from 20 to 80 % by weight polymer dispersion, mainly corresponding to a hardener for a mix-in system, is applicable and has favourable properties in a method for separate application of adhesive and hardener.

### Detailed description of the invention

The hardener according to the present invention comprises a liquid in which one or more acid(s), acid salt(s) and /or acid generating salt(s) as active component(s) are dissolved.

The selection of acid(s), acid salt(s) or acid generating salt(s) primarily depends on the desired characteristics for the hardener, such as how quickly it is desired that the curing takes place after the hardener and the adhesive are brought together.

Examples of preferred acids are phosphoric acid, sulfamic acid, maleic acid or citric acid.

Acid salts are in the context of the present invention salts that results in an acidic solution when they are dissolved in water. Examples of acid salts are aluminium nitrate, aluminium sulphate and aluminium chloride.

An acid generating salt is in the context of the present invention a salt that reacts with components in the adhesive to generate an acid. Preferred acid generating salts are ammonium salts, such as ammonium phosphate, ammonium sulphate and ammonium chloride.

The hardener may have a pH in the range from 0 to 4, preferably from 0.5 to 3.0. To obtain the preferred characteristics the harder has to include an acid and an acid salt, an acid and an acid generating salt, or an acid generating salt and an acid salt. The hardener may also comprise an acid in combination with both an acid generating salt and an acid salt. The hardener may also comprise more than one acid, more than one acid generating salt and/or more than one acid salt.

The amounts of the active ingredients in the hardener are combined so that the required pH and amount of acid are obtained, and are preferably primarily determined by the solubility of the salts and the required reactivity of the hardener.

The polymer that preferably is available in an aqueous solution in the hardener is preferably selected among vinyl adhesives, polyurethane and / or polyacrylate and may comprise one of the mentioned polymers or as a mixture of more than one of the mentioned polymers. The polymer dispersion may constitute 20 to 80 % by weight, preferably 50 to 70 % by weight of the hardener. Normally the content of solids in these dispersions as delivered, is in the range 40 to 60 % by weight. Thus, the polymer, or the solids, of the emulsion constitutes 8 to 48 % by weight, preferably 20 to 42 % by weight of the hardener.

It is also preferred that the dispersion or at least a part of the dispersion is functionalised.

The expression "functionalised" about polymers is in the present description and claims used in the meaning that the polymer comprises cross-binding groups.

Cross-binding groups may be introduced into vinyl adhesives by introducing small amounts of reactive monomers such as N-methylolacrylamide or triallylcyanurate, to be polymerised with the vinyl adhesive. Polyvinylacetate (PVAc), ethylenevinylacetate and polyvinylpropionate are examples on preferred vinyladhesives.

Preferred polymer dispersion may be emulsion adhesives, e.g. the emulsion adhesives described in US Patent No. 5.545.648. This polymer dispersion has a pH in the range 2 to 6 and comprises at least one homo- or co-polymer polyvinyl ester, and at least one polymer protective colloid.

Specially preferred as the copolymer are the copolymers that includes N-functional groups, such as (meth)arylamide, allylcarbamate, acrylonitrile, N-methylol(meth)acrylamide, N-methylolallylcarbamate, alcyl ethers and Mannich bases of N-methylol(meth)acrylamide and N-methylolallylcarbamate etc. It is preferred that the amount of these monomers is less than 15% of weight of the total amount of monomers.

To achieve the desired effect in that the hardener has improved adhesion to the substrate and to avoid that the hardener is taken up by the roller for application of the adhesive, it has surprisingly been found to be specially preferred to use polyvinylacetate as the polymer. It is specially preferred to combine two or more polyvinylacetate dispersions. It is most preferred to use two polyvinylacetate dispersions, of which one dispersion is non-modified and the other is modified to be cross binding. Preferably these dispersions are present in approximately the same amounts in the hardener.

The dispersions used in the hardener preferably have a molecular weight in the range from about 2000 to about 20000, have a viscosity in the range from 5000 to 40000 mPa*s, more preferably from about 10000 to about 25000 at 23 °C, and has a content of solids from 45 to 65 % by weight. It has been found to especially preferable that the used PVAc is crossbinding by polymerisation with small amounts reactive monomers as mentioned above.

The content of solids in the finished hardener is usually within the range 30 to 60 % by weight, more preferably 35 to 50 % by weight.

The hardener according to the present invention may additionally comprise additives that are traditionally added to hardeners, such as an antifoaming agent, surfactants, thickeners, colorants and formaldehyde scavengers.

Formaldehyde scavengers may be added to bind parts of the formaldehyde liberated during the curing process so that the emission of formaldehyde during the curing process and from the finished product is as low as possible. A suitable agent to bind formaldehyde is urea.

The skilled man in the art is aware of several antifoaming agents and surfactants that may be used in hardeners of this type. Suitable as thickeners are e.g. natural gum, guar gum and polyurethane thickeners. Examples on fillers are kaolin, talc and barium sulphate. Additionally colorants may be added to make it possible to control the application visually. Any colorant that does not adversely affect the catalytic properties of the hardener and that tolerates acidic pH may be used here.

**Table 1. The hardener according to the present invention typically comprises, in % by weight:**

| **Ingredient** | **% by weight** |
|---|---|
| Polymer dispersion | 20 - 80 |
| Acid | 0-30 |
| Acid salt | 0-20 |
| Acid generating salt | 0-20 |
| Conventional additives | 0-3 |
| Formaldehyde scavenger | 0-25 |
| Filler | 0-30 |
| Water | to 100 |

Specific examples of useable hardeners are mentioned below.

The hardener may be applied by means of a roller and it has been demonstrated that a satisfactory even spread at a surface may be obtained both with a dense and hard roller, like a smooth roller of steel, or with a soft sponge roller with pores that absorb a part of the hardener. The regulation of the applied amount may be done in a conventional way, e.g. as described in NO 152.449. The hardener may also be applied by means of other suitable means for application of hardener, e.g. by means of nozzles.

The applied amount, measured in g/m², is of great importance as it is difficult to achieve an even spread using too low applied amount whereas too much applied hardener may result in problems for a subsequent application of the adhesive. The applied amount of hardener is preferably in the range 2 - 70 g/m², preferably 4 - 40 g/m².

The glue or adhesive in the present gluing system is of the amino adhesive type such as urea formaldehyde (UF) adhesive or melamine urea formaldehyde (MUF) adhesive. Preferably the UF and MUF adhesives have a content of solids of about 40 to 70 % by weight, a viscosity at about 600 to about 6000 mPa*s, preferably about 1500 mPa*s to 4500 mPa*s at 25°C, and a content of free formaldehyde of less than 1%. Amino adhesives of this type may be produced by well known addition reactions of formaldehyde to the respective amino compound followed by a condensation reaction to produce the polymer. Said products are commercially available for example from Dynea AS under trademarks as Dynorit® L-103,Dynorit® L-1 08, Hiacoll GL7F, .Hiacoll H32H and Urex 3883.

The adhesive is normally applied after the application of the hardener and preferably immediately thereafter but it is also possible to apply the adhesive later. It is also possible to reverse the order of application. Conveniently a roller having a grooved surface is used for the application.

After application of hardener and adhesive the substrates to be glued are brought together. The assembled parts are then introduced into a press where the materials are exposed to pressure and are preferably supplied with energy as heat or high frequency electric currency, so called high frequency (HF), to accelerate the curing.

The required pressing time, i.e. the time from assembled parts are pressed together until the adhesive is sufficiently cured so that the pressure can be taken away and the glued materials may be handled, is dependent on the actual acid, acid salt and/or acid generating salt in the hardener, their concentration and the temperature, respectively the applied energy during the curing process. The preferred pressing time when applying HF energy during the curing of parquet is in the range 15 to 45 seconds, whereas it is about one second for foil bonding using roller presses. For cold pressing of laminated wood the pressing time is normally in the range of about 5 to 50 minutes.

A faster curing and a better glue line are obtained by using the hardener according to the present invention than by using a corresponding hardener not containing polymer dispersion. Without wishing to be bound by any particular theory, one possible explanation is that the polymer dispersion prevents the acid, the acid salt and/or the acid generating salt from being absorbed by the substrate. The polymer dispersion is known as an emulsion adhesive that will form a film at the surface of the substrate. The acid, the acid salt and/or the acid generating salt then remains in the film and thus remains more easily available for the adhesive when it is applied. It also seems that the polymer dispersion has sufficient adhesion to the substrate so that the hardener remains on the substrate and is not pulled up by the roller for application of adhesive so that the problems associated with that is avoided. A positive effect is that a good adhesion to both surfaces in the glue line is achieved.

### Examples

The following tests are used in some of the examples below:

### "Chisel test"

A knife was inserted into the glued joint of a laminate to split the laminate. The surface of the rupture was studied. For a high quality joint the rupture will be outside the glued joint, whereas a low quality joint will break in the glued joint. A high quality joint was confirmed by a rupture outside the glued joint, as visualised by a rupture of the wood, confirming no rupture of the joint.

### ANSI test

Laminated test samples having a dimension of 5 * 12,5 cm was tested according to American National Standard for Laminated Hardwood Flooring (ANSI/HPMA LHF-1987).

The test samples is exposed for three cycles of the following treatment: The samples are submerged in water at 25°C for 4 hours and dried at 50 °C for 19 hours.

The requirement is that the total delamination for each test sample does not exceed 50 mm.

### Preliminary comparison tests

A commonly used and generally accepted method for testing the expected curing time for a glue system under controlled conditions, is to measure the gel time, i.e. the time from the adhesive and hardener are mixed in a beaker or the like, to the mixture forms a gel.

For a practical measurement of gel time 50g adhesive was weighed into a beaker that was put into a water bath that was controlled at the desired temperature ± 0,5 °C. After stabilising the temperature, 1,0 g hardener was added with a disposable syringe and the mixture was agitated with a glass rod until a gel was formed, i.e. that the mixture became highly viscous and followed the glass rod. The time from addition of the hardener to the formation of the gel was measured with a stopwatch.

Dynorit® L-108 from Dynea ASA was used as adhesive in these preliminary tests.

Two different hardeners, a first hardener conventionally used for separate application in combination with Dynorit® L-108, and a second hardener according to the present invention, was used for the tests.

**Table 2: The hardeners had the following compositions:**

| | Hardener according to the present invention | Conventional hardener for separat application |
|---|---|---|
| Aluminium chloride-6-hydrate | 6 % | |
| Monoammonium phosphate | 4 % | |
| Functionalised PVAc | 60 % | |
| Antifoam additive | 0,1 % | |
| Citric acid | | 8% |
| Aluminium sulphate | | 4% |
| Urea | | 0,3% |
| Surfactant | 1,5% | 0,05% |
| Water | to 100 % | to 100 % |

**Table 3: The measured gel times were as follows (in minutes (') and seconds (")) :**

| | Hardener according to the present invention | Comments | Conventional hardener for separate application | Comments |
|---|---|---|---|---|
| 20 °C | 20'10" | Paste | 12'30" | Paste |
| | 24'30" | Gel | 15'44" | Gel |
| | | | | |
| 50 °C | 1'30" / 1'35" | | 1'35" / 1'35" | |

This comparison test indicates that the two hardeners are approximately equally fast for this adhesive at 50 °C. The traditional hardener for mix-in glue systems was however somewhat faster at 20 °C than the hardener according to the present invention.

### Example 1

A rectangular test specimen of 100 mm * 250 mm and a total thickness of 28 mm was produced in this test. The test specimen was produced according to the most common practice for production of sandwich parquet, where a 5 layered board having the surface layer in the middle, a core layer at each side of the surface layer and a backing veneer at each side of the assembled board is produced. This 5 layered is thereafter split by means of sawing in the middle of the surface layer to produce two boards of a 3 layered parquet.

The test specimen had a 8 mm thick surface layer in the middle. A core layer of spruce was placed at each of the surface layer side of the surface layer and a 2 mm thick backing veneer at each outer surface of the assembly.

The same hardener as used in the initial example mentioned above, was used in this test. The hardener was applied to the core layer by means of a plain steel cylinder roll in an amount of approx. 20 g/m².

Thereafter 150 g/m² of a urea formaldehyde adhesive was applied to the surfaces of the core layer by means of a hard rubber roller. The adhesive used was Dynorit® L-108 from Dynea ASA.

The beech surface layer was placed at the top of the coated surface and another core layer and a backing veneer were placed at the to of the surface layer to make up the described 5 layered structure. The assembled 5 layered structure was after a waiting time of about 2 minutes placed in a high frequency (HF) press wherein the parts were pressed together under simultaneous heating by means of high frequency electric current. The test specimen was added an effect of 2.2 kW by an anode current of 1 A in 15 seconds under a pressure of approx. 6 kp/cm². The test specimen was removed form the press and even after the short press time it was found that the curing progress was sufficiently advanced so that a very good adhesion between the core layer and the surface layer had been achieved.

After a waiting time of approx. one minute for final curing after the test specimen was removed from the press the strength of the joint line was exposed for a chisel test, where a knife was pressed into the joint line to split the surface layer from the core layer. The resulting fracture surface demonstrated 100 % fracture of the wood of the core layer, and no fracture of the glue line. This confirms that the quality of the glue line was good.

### Comparison example

The test was carried out as outlined in example 1 with he following alterations:
- the hardener was substituted with the same standard hardener for separate application as described in the preliminary test,
- a press time of 25 seconds was necessary to obtain the sufficient curing and thereby adhesion to the substrate so that the test specimen could be removed from the press.

The chisel test as described above resulted in partly breach in the wood of the and partly in the glue when the core layer was split from the surface layer. In other words, the glue line obtained in this example after a press time of 25 seconds vs. 15 seconds in example 1, was weaker than the glue line of example 1.

This result was totally unexpected from the tests of the gel time in the preliminary test.

### Example 2

Beech boards being 4 mm thick, 62 mm wide and 250 mm in length was edge glued. Hardener was applied at an edge of the board in an amount of 35 g/m² using a sponge.

**Table 4: The hardener had the following composition:**

| **Ingredient** | **% by weight** |
|---|---|
| Aluminium nitrate | 11 |
| Ammonium chloride | 6 |
| Water | to 100 |
| Functionalised PVAc dispersion | 30 |
| Non functionalised PVAc dispersion | 28 |
| Antifoaming agent | 0,1 |
| Total | 100 |

Urea formaldehyde adhesive, Dynorit® L110L, from Dynea ASA, was applied at the adjacent side surface of another beech board with a brush in an amount of about 100 g/m².

Immediately after application of adhesive and hardener the side surfaces were pressed against each other and the boards was placed in a heating press with travers pressure. The temperature of the press plates was 105°C. The glued beech boards were removed from the press after a press cycle time of 25 seconds. The glued joint already had a good handling strength. After conditioning at 20 °C/65% relative humidity (RH), the strength of the glued joint was tested by bending load perpendicular to the fibre orientation of the boards until the board broke. The fracture surface demonstrated 100 % fracture of the wood.

### Example 3

A test was performed at a full-scale plant for parquet production. Normally a glue system comprising the adhesive Dynorit L-108 and a traditional hardener as mentioned in table 2, was used in the plant for production of 5 layered parquet for later splitting. The HF-time in using the traditional glue system was 37 seconds. Reference tests were picked out from the normal production. The assembly time for all tests was 1-2 minutes.

### Test parameters:

| | |
|---|---|
| Materials: | 5 layered sandwich parquet to be split, smoked beech surface layer |
| Applied adhesive: | Dynorit L-108, approx. 155 g/m² |
| Applied hardener: | The inventive hardener according to table 2, approx. 22-27 g/m² |

**Table 5 Results**

| Test item | Press time, sec. | Gluing results | Results, chisel test | ANSI test, delam. in mm | | | Surface temp., °C |
|---|---|---|---|---|---|---|---|
| | | | | 1 | 2 | 3 | |
| 1 | 22 | Some loose backing veneer | Somewhat better than the reference | 56* | 67* | - | 41-50 |
| 2 | 25 | Some loose backing veneer | Somewhat better than the reference | 0 | 0 | 88* | 46-52 |
| 3 | 27 | OK | Very good rupture of the wood in both glue lines | 0 | 17 | 43* | 44-58 |
| 4 | 32 | OK | Very good rupture of the wood in both glue lines | 0 | 0 | 0 | 45-58 |
| 5 | 37 | OK | Very good rupture of the wood in both glue lines | 0 | 0 | | 55-59 |
| Ref. | 37 | OK | Acceptable but not a deep rupture of the wood | 5 | 0 | 0 | 75-80 |

| | | | | | | | |
|---|---|---|---|---|---|---|---|
| * the glue line showed no indication of undercuring. The delamination was probably caused by the fact that the joint between two parquet blocks in the surface layer was to close to the edge of the test item (ca. 5mm). This will result in extraordinary tensions. | | | | | | | |

### Example 4 - production of parquet

A test was performed at another a full-scale plant for parquet production. Normally a glue system comprising the adhesive Dynorit L-108 and a traditional hardener as mentioned in table 2, was used in the plant for production of 5 layered parquet for later splitting. Three presses were used, press 1 and 2 having a HF generator of 80 kW and press 3 having a HF generator of 120 kW. Normally a glue system comprising Dynorit L-108 adhesive and a traditional hardener according to table 2 was used at the plant.

In a preliminary test, 19-20 g/m² hardener and 140 g/m² adhesive was applied. The materials was 6-layered parquet with oak surface layer having the configuration: backing veneer - core layer - 2 layers of 4 mm oak surface layers - core layer - backing veneer.

**Table 6 Results**

| | Press 1 | Press 2 | Press 3 |
|---|---|---|---|
| HF time (seconds) | 33 | 34 | 22 |
| Total time (seconds) | 43 | 44 | 27 |
| KJ | 2965 | 2946 | 2939 |
| Surface temperature of the stack when taken out of the press (°C) | 65-67 | 67-74 | 64-72 |
| Temperature in the glue line against the surface layer (drilling) (°C) | 70-73 | | 75-78 |
| Result of gluing | Good | Good | Good |

Tests with variation in press times were carried out in the same plant using the same presses at the same materials. The application of hardener was reduced to 14-15 g/m² and adhesive was applied at 130 - 140 g/m².

**Table 7 Results**

| | Press 1 | | | Press 2 | Press 3 | |
|---|---|---|---|---|---|---|
| Parallel | 1 | 2 | 3 | 1 | 1 | 2 |
| HF time (seconds) | 28 | 23 | 18 | 23 | 20 | 17 |
| Total time (seconds) | 38 | 34 | 29 | 34 | 25 | 22 |
| KJ | 2386 | 1906 | 1531 | 1927 | 2726 | 2050 |
| Surface temperature of the stack when taken out of the press (°C) | 67-70 | 57-64 | 53-57 | 55-62 | 64-69 | 61-66 |
| Temperature in the glue line against the surface layer (drilling) (°C) | 61-68 | 62-65 | 49-53 | 59-62 | 55-57 | |
| Result of gluing | Good | Good | Poor | Good | Good | |

The maximum closed assembly time was found to be 5 minutes at a room temperature of 23°C.

The tests showed that the HF time and he applied energy could be substantially reduced using the present method and the hardener comprising a polymer emulsion compared with the method normally used in the plant. The normal press times in the plant are 33 seconds in press 1 and 2, and 22 seconds in press 3. The HF time could be reduced from 33 to 22 seconds using press 1 or 2, and from 22 to 17 seconds in press 3, corresponding to a reduction in applied energy of about 1000 kJ. This reduction in press time and corresponding reduction in applied energy results in a reduction in the temperature in the materials of about 10-15 °C.

### Example 5 - edge bonding of surface layer for parquet

The adhesive Dynorit L-108 and the present hardener according to table 2 were used for edge bonding of ash surface layer. The adhesive and the hardener were applied with rollers. Press times of 26 and 20 seconds at a press temperature of 105 °C were tested. The results were very good for both press times. During the normal day to day work a press time of 26 seconds are used in the actual plant.

### Example 6 - effect of press time

5-layered parquet was produced in a full-scale plant using different press times with an oak surface layer. Due to the condition of the application roller for the hardener 35 g/m², i.e. more than 10 % by weight, was applied. 150 g/m² adhesive was applied in test 1, 2 and 3 and somewhat more adhesive was applied in test 4, 5 and 6.

The test items were divided in 5 pieces after pressing and the quality of the glue line was tested according to the chisel test after resting for one hour.

**Table 8 Effect of different press times**

| | Test 1 | Test 2 | Test 3 | Test 4 | Test 5 | Test 6 |
|---|---|---|---|---|---|---|
| HF time, sec. | 23 | 18 | 15 | 15 | 15 | 12 |
| Post H F press time | 9 | 14 | 17 | 17 | 9 | 20 |
| Total press time | 32 | 32 | 32 | 32 | 24 | 32 |
| Surface temp., | 66-70 | 60-62 | 55-60 | 55-57 | Ca. 59 | 53-54 |
| °C Glue line | | Good | Good | Good | Good | Some poor points |

Even after reducing the HF time from 23 seconds normally used in this press to 15 seconds and thus reducing the surface temperature 10 to 15°C, the glue line had satisfactory quality.

It was also surprising that no problems with hardener being pulled up by the roller for application of the glue was observed even if the applied amount of hardener was higher than normal.

### Example 7 - Parquet production

After the positive test of example 6, full-scale production was tested in the same plant using reduced HF times and different surface layers. The normal HF time in the plant using Dynorit L-108 adhesive and the traditional hardener according to table 2, was 23 seconds. The quality of the glue line was evaluated using the chisel test and an internal test scale from 0 to 10, 10 being the top score 10-15 minutes and 2 hours after gluing.

**Table 9 Results**

| Surface layer | Ash | Ash | Beech | Beech | Oak |
|---|---|---|---|---|---|
| Amount of hardener | | | | | |
| Top roller, g/m², approx. | 32 | 32 | 32 | 32 | 32 |
| Lower roller, g/m², approx. | 28 | 28 | 28 | 28 | 28 |
| Amount of adhesive | | | | | |
| Top roller, g/m², approx. | 165 | 165 | 165 | 165 | 165 |
| Lower roller, g/m², approx. | 140 | 140 | 140 | 140 | 140 |
| HF time, seconds | 17 | 15 | 17 | 15 | 17 |
| Post HF press time, seconds | 15 | 17 | 15 | 17 | 15 |
| Total press time | 32 | 32 | 32 | 32 | 32 |
| Glue line temperature, °C ¹⁾ | 54-62 | | Ca. 60 | | 56-65 |
| Quality of glue line | 8-10 | 7-8 ²⁾ | | 7-8 | 8-9 |

| | | | | | |
|---|---|---|---|---|---|
| 1) The correspondence between surface temperature and glue line temperature was good. 2) It was noted during the chisel test that the surface layer was somewhat looser compared with a HF time of 17 seconds. | | | | | |

The HF time was reduced from the normal 23 seconds to 17-15 seconds. This resulted in a reduction in surface temperature of about 15- 20°C without any detrimental effect on the glue line.

The present invention is described with reference to examples for laminating of sandwich parquet and edge bonding of boards. The present invention is however applicable to other purposes such as gluing of single layer solid wood panels and the like and so-called foil bonding. Solid wood panels laminated boards are normally produced by edge bonding of boards typically having a thickness of 18 mm or 28 mm, as an example in a way corresponding to the above described edge bonding of thin beech boards.

Foilbonding is gluing of a foil to wood based boards, for example in the production of roofing sheets or boards for plate for children's furniture. In foil bonding the hardener is present in dry form at the reverse side of the foil. The adhesive is applied to the board before the foil and the boards are placed against each other and are pressed towards each other. Alternatively the adhesive and hardener are applied separately to the board in any order before the foil and plate are pressed towards each other. In foil bonding in a continuos process the press time often is as short as about one second.

Even if the present invention is described with reference to methods where heat is used to accelerate hardening, the present invention may also be used for cold pressing. The curing times will however be considerably longer for cold pressing than if heat is added and will typically be in the range from 5 to 50 minutes.

## Claims

1. A process for gluing laminated products with a curing amino adhesive, such as melamine urea formaldehyde (MUF) adhesive or urea formaldehyde (UF) adhesive and a hardener comprising acid salt and/or acid generating salt and a polymer dispersion or a mixture of different polymer dispersions comprising at least one cross-binding polymer, and conventional additives , **characterised in that** the adhesive and the hardener are applied separately to the same surface of the parts to be glued, and that the parts thereafter are joined and that the glue thereafter is cured under pressure.

2. The process according to claim 1, wherein the pH of the hardener is from 0 to 4, preferably 0,5 to 3.

3. The process according to claim 1 or 2, wherein the hardener is applied first to the surface and the adhesive thereafter is applied at the top of the hardener.

4. The process according to claim 1 or 2, wherein the adhesive is applied first to the surface and the hardener thereafter is applied at the top of the adhesive.

5. The process according to one of the previous claims, wherein the hardener is applied in an amount in the range from 2 to 70 g/m², preferably 4 to 40 g/m².

6. The process according to any of the previous claims, wherein the polymer dispersion or mixture of dispersions constitutes 20 to 80 % by weight, preferably 50 - 70 % by weight of the hardener.

7. A use of a hardener comprising acidic salt and/or acid generating salt, a polymer dispersion or a mixture of different polymer dispersions, the polymer dispersion or mixture of polymer dispersions comprising at least one cross-binding polymer, and conventional additives in a process for gluing wooden materials by separate application of adhesive and hardener to the same surface of the substrates to be glued, and where the adhesive is a curing amino adhesive such as melamine-urea-formaldehyde (MUF) or urea-fonnaldehyde (UF) adhesive.

8. The use according to claim 7, where the polymer dispersion or mixture of polymer dispersions constitutes 20 to 80 % by weight, preferably 50 - 70 % by weight of the hardener.

9. The use according to claim 7 or 8, where hardener has a pH of 0 to 4, preferably 0.5 to 3.

10. The use according to any of the claims 7 to 9, where hardener includes in the range from 30 to 60 % by weight, preferably 35 to 50 % by weight solids.

11. The use according to one or more of the claims 7 to 10, wherein the polymer(s) in the polymer dispersion is (are) selected from vinyl adhesives, polyurethane and/or polyacrylate.

12. The use according to one or more of the claims 7 to 11, wherein the polymer dispersion(s) is (are) emulsion adhesive(s).

13. The use according to one or more of the claims 7 to 11, wherein the polymer(s) is (are) polyvinylacetate, where preferably a part of the cross-binding polyvinylacetate.

## Patentansprüche

1. Verfahren zum Kleben von laminierten Produkten mit einem härtenden Amino-Klebstoff, wie beispielsweise Melamin-Urea-Formaldehyd (MUF) Klebstoff oder Urea-Formaldehyd (UF) Klebstoff und einem Härter, umfassend saures Salz und/oder säurebildendes Salz und eine Polymerdispersion oder eine Mischung von verschiedenen Polymerdispersionen, umfassend zumindest ein vernetzendes Polymer und herkömmliche Zusätze, **dadurch gekennzeichnet, dass** der Klebstoff und der Härter getrennt auf der gleichen Oberfläche der zu klebenden Teile appliziert werden, und dass die Teile danach verbunden werden, und dass der Kleber danach unter Druck gehärtet wird.

2. Verfahren nach Anspruch 1, wobei der pH-Wert des Härters im Bereich von 0 bis 4, vorzugsweise 0,5 bis 3, liegt.

3. Verfahren nach Anspruch 1 oder 2, wobei der Härter zuerst auf der Oberfläche appliziert wird und der Klebstoff danach oben auf dem Härter appliziert wird.

4. Verfahren nach Anspruch 1 oder 2, wobei der Klebstoff zuerst auf der Oberfläche appliziert wird und der Härter danach oben auf dem Klebstoff appliziert wird.

5. Verfahren nach einem der vorhergehenden Ansprüche, wobei der Härter in einer Menge im Bereich von 2 bis 70 g/m², vorzugsweise 4 bis 40 g/m², appliziert wird.

6. Verfahren nach einem der vorhergehenden Ansprüche, wobei die Polymerdispersion oder die Mischung von Dispersionen 20 bis 80 Gewichtsprozent, vorzugsweise 50-70 Gewichtsprozent, des Härters bildet.

7. Verwendung eines Härters, umfassend saures Salz und/oder säurebildendes Salz, eine Polymerdispersion oder eine Mischung von verschiedenen Polymerdispersionen, wobei die Polymerdispersion oder die Mischung von Polymerdispersionen zumindest ein vernetzendes Polymer umfasst, und herkömmliche Zusätze in einem Verfahren zum Kleben von Holzmaterialien durch getrenntes Applizieren des Klebstoffs und des Härters auf der gleichen Oberfläche der zu klebenden Substrate, und wobei der Klebstoff ein härtender Amino-Klebstoff, wie z. B. Melamin-Urea-Formaldehyd (MUF) oder Urea-Formaldehyd (UF) Klebstoff ist.

8. Verwendung nach Anspruch 7, wobei die Polymerdispersion oder die Mischung von Polymerdispersionen 20 bis 80 Gewichtsprozent, vorzugsweise 50-70 Gewichtsprozent, des Härters ausmacht.

9. Verwendung nach Anspruch 7 oder 8, wobei der Härter einen pH-Wert von 0 bis 4, vorzugsweise 0,5 bis 3, aufweist.

10. Verwendung nach einem der Ansprüche 7 bis 9, wobei der Härter Feststoffe im Bereich von 30 bis 60 Gewichtsprozent, vorzugsweise 35 bis 50 Gewichtsprozent, enthält.

11. Verwendung nach einem oder mehreren der Ansprüche 7 bis 10, wobei das/die Polymer/e in der Polymerdispersion aus Vinyl-Klebstoffen, Polyurethan und/oder Polyacrylat ausgewählt wird/werden.

12. Verwendung nach einem oder mehreren der Ansprüche 7 bis 11, wobei die Polymerdispersion/en Emulsionsklebstoff/e ist/sind.

13. Verwendung nach einem oder mehreren der Ansprüche 7 bis 11, wobei das/die Polymer/e Polyvinylacetat, vorzugsweise ein Teil des querbindenden Polyvinylacetats ist/sind.

## Revendications

1. Procédé de collage de produits stratifiés à l'aide d'une colle durcissable aminée, telle qu'une colle mélamine-urée-formol (MUF) ou une colle urée-formol (UF) et un durcisseur comprenant un sel acide et/ou un sel acidogène et une dispersion polymère ou un mélange de différentes dispersions polymères comprenant au moins un polymère à réticulation, et des additifs classiques, **caractérisé en ce que** la colle et le durcisseur sont appliqués séparément sur la même surface des pièces à coller, et les pièces sont ensuite jointes et **en ce que** la colle est alors durcie sous pression.

2. Procédé selon la revendication 1, dans lequel le pH du durcisseur se situe entre 0 et 4, de préférence entre 0,5 et 3.

3. Procédé selon la revendication 1 ou 2, dans lequel le durcisseur est appliqué d'abord sur la surface et la colle est ensuite appliquée en haut du durcisseur.

4. Procédé selon la revendication 1 ou 2, dans lequel la colle est appliquée d'abord sur la surface et le durcisseur est appliqué ensuite en haut de la colle.

5. Procédé selon l'une quelconque des revendications précédentes, dans lequel le durcisseur est appliqué en une quantité située dans la plage de 2 à 70 g/m², de préférence 4 à 40 g/m².

6. Procédé selon l'une quelconque des revendications précédentes, dans lequel la dispersion polymère ou le mélange de dispersions constitue de 20 à 80 % en poids, de préférence de 50 à 70 % en poids du durcisseur.

7. Utilisation d'un durcisseur comprenant un sel acide et/ou un sel acidogène, une dispersion polymère ou un mélange de différentes dispersions polymères, la dispersion polymère ou le mélange de dispersions polymères comprenant au moins un polymère à réticulation, et des additifs classiques dans un procédé permettant de coller des matériaux en bois par application séparée d'adhésif et de durcisseur sur la même surface des substrats à coller, et où la colle est une colle durcissable aminée telle qu'une colle mélamine-urée-formol (MUF) ou urée-formol (UF).

8. Utilisation selon la revendication 7, dans laquelle la dispersion polymère ou le mélange de dispersions polymères constitue de 20 à 80 % en poids, de préférence de 50 à 70 % en poids du durcisseur.

9. Utilisation selon la revendication 7 ou 8, dans laquelle le durcisseur a un pH compris entre 0 et 4, de préférence entre 0,5 et 3.

10. Utilisation selon l'une quelconque des revendications 7 à 9, dans laquelle le durcisseur comprend entre 30 et 60 % en poids, de préférence entre 35 et 50 % en poids de matières solides.

11. Utilisation selon une ou plusieurs des revendications 7 à 10, dans laquelle le(s) polymère(s) dans la dispersion polymère est (sont) sélectionné(s) parmi des colles vinyliques, du polyuréthanne et/ou du polyacrylate.

12. Utilisation selon une ou plusieurs des revendications 7 à 11, dans laquelle la (les) dispersion(s) de polymère est (sont) une (des) colle(s) en émulsion.

13. Utilisation selon une ou plusieurs des revendications 7 à 11, dans laquelle le(s) polymère(s) est (sont) un acétate de polyvinyle, de préférence une partie d'un acétate de polyvinyle à réticulation.
